# EUROPEAN PATENT APPLICATION

(11) **EP 4 838 387 A1**
(43) Date of publication of application: **11.11.2026**
(21) Application number: 24921229.1
(22) Date of filing: 21.05.2024
(51) Int. Cl.: G06F 18/241

(54) **COMPONENT SIZE GRADING METHOD AND PRODUCTION DEVICE**

(30) Priority: 02.02.2024 CN 202410150681
(71) Applicant: Honor Device Co., Ltd., Shenzhen, Guangdong 518040 (CN)
(72) Inventor: XIN, Daiping, Shenzhen, Guangdong 518040 (CN)
(74) Representative: Isarpatent
(86) International application number: PCT/CN2024/094560
(87) International publication number: WO 2025/161187

(57) **Abstract**

Embodiments of this application provide a component size grading method and a production device. The method includes: obtaining a plurality of pieces of size data of a plurality of components; determining a plurality of grading solutions of the plurality of components based on the plurality of pieces of size data; determining matching solutions of the plurality of components based on the plurality of grading solutions of the plurality of components; calculating a fitness score of each matching solution; and determining a matching solution of a preset assembly based on the fitness score of each matching solution. In the embodiments of this application, automatic optimization of a matching solution of a component size of the preset assembly is implemented, thereby effectively improving an assembly yield of the preset assembly.

## Description

### CROSS-REFERENCE TO RELATED APPLICATIONS

This application claims priority to Chinese Patent Application No. 202410150681.3, filed with the China National Intellectual Property Administration on February 2, 2024 and entitled "SIZE GRADING METHOD FOR HINGE ASSEMBLY AND RELATED DEVICE", which is incorporated herein by reference in its entirety.

### TECHNICAL FIELD

This application relates to the field of intelligent terminal production technologies, and in particular, to a component size grading method and a production device.

### BACKGROUND

In a process of assembling a plurality of components into a mechanical assembly, matching of components of different sizes may affect an assembly yield of the mechanical assembly. Therefore, it is necessary to perform tolerance grading on a component size of the mechanical assembly. However, in the related art, a method for determining a component size grading solution of a mechanical assembly through tolerance grading is complex and time-consuming.

### SUMMARY

In view of the foregoing content, it is necessary to provide a component size grading method and a production device, to resolve the foregoing problem in the related art that a method for determining a component size grading solution of a mechanical assembly through tolerance grading is complex and time-consuming.

According to a first aspect, an embodiment of this application provides a component size grading method, applied to a production device. The method includes: obtaining a plurality of pieces of size data of a plurality of components; determining a plurality of grading solutions of the plurality of components based on the plurality of pieces of size data; determining matching solutions of the plurality of components based on the plurality of grading solutions of the plurality of components; calculating a fitness score of each matching solution; and determining a matching solution of a preset assembly based on the fitness score of each matching solution.

Through the foregoing technical solution, automatic optimization is performed on the grading solutions and the matching solutions of the plurality of pieces of size data of the plurality of components, thereby improving efficiency and accuracy of performing grading and matching on the size data of the preset assemblies, and effectively improving an assembly yield of the preset assemblies.

In a possible implementation, the determining a plurality of grading solutions of the plurality of components based on the plurality of pieces of size data includes: setting grading levels of the plurality of pieces of size data of the plurality of components and a grading threshold of each level; and determining the grading levels of the plurality of pieces of size data of the plurality of components and the grading threshold of each level as the plurality of grading solutions of the plurality of components.

Through the foregoing technical solution, a genetic algorithm is used to perform automatic optimization on the grading solutions of the component size data, thereby improving efficiency and intelligence of component size grading and matching.

In a possible implementation, the determining matching solutions of the plurality of components based on the plurality of grading solutions of the plurality of components includes: determining, based on an inverse cumulative distribution function, a quantile corresponding to each grading threshold of the plurality of pieces of size data of the plurality of components; grouping the plurality of pieces of size data of the plurality of components based on the quantile corresponding to each grading threshold; and matching grouped size data of different components, to obtain matching solutions of the plurality of pieces of size data of the plurality of components.

Through the foregoing technical solution, a genetic algorithm is used to perform automatic optimization on the matching solutions of the component size data, thereby improving efficiency and intelligence of component size grading and matching.

In a possible implementation, the determining, based on an inverse cumulative distribution function, a quantile corresponding to each grading threshold of the plurality of pieces of size data of the plurality of components includes: calculating size data corresponding to each grading threshold by using the inverse cumulative distribution function of normal distribution, and determining the calculated size data corresponding to each grading threshold as the quantile.

According to the foregoing technical solution, the quantile corresponding to the grading threshold can be quickly calculated, thereby improving efficiency of matching the size data of the plurality of components.

In a possible implementation, the calculating a fitness score of each matching solution includes: calculating the fitness score of each matching solution based on the grouped size data of the different components by using a fitness function.

According to the foregoing technical solution, the fitness score of each grading solution can be accurately calculated.

In a possible implementation, the determining a matching solution of a preset assembly based on the fitness score of each matching solution includes: when a fitness score of any matching solution is greater than or equal to a preset fitness score threshold, determining the any matching solution as the matching solution of the preset assembly; or determining a matching solution with a highest fitness score in a plurality of matching solutions as the matching solution of the preset assembly.

Through the foregoing technical solution, the matching solution of the preset assembly can be accurately determined.

In a possible implementation, the calculating the fitness score of each matching solution based on the grouped size data of the different components by using a fitness function includes: inputting the grouped size data of the different components that corresponds to each matching solution into a prediction model, to obtain a plurality of prediction results of each matching solution; and obtaining the fitness score of each matching solution based on the plurality of prediction results of each matching solution by using the fitness function.

Through the foregoing technical solution, the fitness score of each matching solution can be accurately calculated.

In a possible implementation, the preset assembly is a hinge assembly, the hinge assembly has a flattening angle in a flattened state, and the fitness function is a yield calculation formula for all flattening angle prediction values in the matching solution.

Through the foregoing technical solution, the yield calculation formula for the flattening angle prediction values is used as the fitness function, so that efficiency of calculating the fitness score can be improved.

In a possible implementation, the calculating the fitness score of each matching solution based on the grouped size data of the different components by using a fitness function includes: inputting the grouped size data of the different components that corresponds to each matching solution into a flattening angle prediction model, to obtain a plurality of predicted flattening angles of each matching solution; and calculating yields of the plurality of predicted flattening angles of each matching solution, to obtain the fitness score of each matching solution.

Through the foregoing technical solution, the yield of the predicted flattening angles is used as the fitness score of the matching solution, to facilitate evaluation of different matching solutions.

In a possible implementation, the method further includes: extracting a plurality of features affecting the flattening angle of the hinge assembly, where the plurality of features include size data of components of the hinge assembly; and establishing the flattening angle prediction model based on the plurality of features and flattening angle data.

Through the foregoing technical solution, the flattening angle prediction model is established based on the plurality of features affecting the flattening angle of the hinge assembly, thereby improving efficiency of determining corresponding flattening angle data based on the size data of the plurality of components.

In a possible implementation, the extracting a plurality of features affecting the flattening angle of the hinge assembly includes: obtaining force information of the components of the hinge assembly in the flattened state; obtaining sampled data corresponding to the size data of the components based on the force information of the components of the hinge assembly in the flattened state; and performing regression analysis on the sampled data corresponding to the size data of the components, to obtain the plurality of features affecting the flattening angle of the hinge assembly.

Through the foregoing technical solution, the plurality of features of the hinge assembly that affect the flattening angle can be quickly and accurately determined, thereby effectively improving efficiency of grading and matching the component sizes.

In a possible implementation, the performing regression analysis on the sampled data corresponding to the size data of the components, to obtain the plurality of features affecting the flattening angle of the hinge assembly includes: standardizing the sampled data; dividing the sampled data into a training set, and training and fitting a Lasso regression model by using the training set; obtaining coefficients of all the sampled data based on the trained Lasso regression model; and using absolute values of the coefficients as degrees of contribution of the size data of the components to the flattening angle, sorting the size data of the components in descending order based on the degrees of contribution, and selecting, based on a preset percentage, a plurality of pieces of top-ranked size data, to obtain the plurality of features.

Through the foregoing technical solution, the features affecting the flattening angle are selected from a large amount of size data by using the Lasso regression model, and subsequently, the flattening angle prediction model is established based on the features and automatic optimization is performed on the grading and matching solutions, thereby effectively improving efficiency of establishing the flattening angle prediction model and efficiency of optimizing the grading and matching solutions.

In a possible implementation, the establishing the flattening angle prediction model based on the plurality of features and flattening angle data includes: training a preset deep learning model based on the plurality of features and the flattening angle data, to obtain the flattening angle prediction model.

Through the foregoing technical solution, the preset deep learning model is trained through the size data of the components and the flattening angle data of the hinge assemblies, so that an accurate flattening angle prediction model can be obtained, and accuracy of a flattening angle prediction result can be improved.

In a possible implementation, the training a preset deep learning model based on the plurality of features and the flattening angle data, to obtain the flattening angle prediction model includes: establishing a training sample set based on a plurality of groups of features and flattening angle data corresponding to each group of features; inputting a group of features and corresponding flattening angle data that are in the training sample set and that are used as training data into the preset deep learning model, and calculating a loss function value of the preset deep learning model; and adjusting parameters of the preset deep learning model when the loss function value of the preset deep learning model is greater than a preset value, continuing to train the preset deep learning model, until the loss function value of the preset deep learning model is less than or equal to the preset value, determining that training of the preset deep learning model is completed, and determining the preset deep learning model whose training is completed as the flattening angle prediction model.

Through the foregoing technical solution, the preset deep learning model is trained by using the plurality of features affecting the flattening angle of the hinge assembly to establish the flattening angle prediction model, so that accuracy of the flattening angle prediction value output by the flattening angle prediction model can be improved.

According to a second aspect, an embodiment of this application provides a component size grading method, applied to a production device. The method includes: obtaining a plurality of pieces of size data of a plurality of first components and a plurality of second components; determining a plurality of grading solutions of the plurality of first components and the plurality of second components based on the plurality of pieces of size data; determining matching solutions of the plurality of first components and the plurality of second components based on the plurality of grading solutions of the plurality of first components and the plurality of second components; calculating a fitness score of each matching solution; and determining matching solutions of a plurality of preset assemblies based on the fitness score of each matching solution, where each preset assembly includes a first component and a second component.

In a possible implementation, the determining a plurality of grading solutions of the plurality of first components and the plurality of second components based on the plurality of pieces of size data includes: setting grading levels of the plurality of pieces of size data of the plurality of first components and the plurality of second components and a grading threshold of each level; and determining the grading levels of the plurality of pieces of size data of the plurality of first components and the plurality of second components and the grading threshold of each level as the plurality of grading solutions of the plurality of first components and the plurality of second components.

In a possible implementation, the determining matching solutions of the plurality of first components and the plurality of second components based on the plurality of grading solutions of the plurality of first components and the plurality of second components includes: determining, based on an inverse cumulative distribution function, a quantile corresponding to each grading threshold of the plurality of pieces of size data of the plurality of first components and the plurality of second components; grouping the plurality of pieces of size data of the plurality of first components and the plurality of second components based on the quantile corresponding to each grading threshold; and matching grouped size data of the plurality of first components and the plurality of second components, to obtain matching solutions of the plurality of pieces of size data of the plurality of first components and the plurality of second components.

In a possible implementation, the calculating a fitness score of each matching solution includes: calculating the fitness score of each matching solution based on the grouped size data of the plurality of first components and the plurality of second components by using a fitness function.

In a possible implementation, the preset assembly is a hinge assembly, the hinge assembly has a flattening angle in a flattened state, and the fitness function is a yield calculation formula for all flattening angle prediction values in the matching solution.

In a possible implementation, the calculating the fitness score of each matching solution based on the grouped size data of the plurality of first components and the plurality of second components by using a fitness function includes: inputting the grouped size data of the plurality of first components and the plurality of second components that corresponds to each matching solution into a flattening angle prediction model, to obtain a plurality of predicted flattening angles of each matching solution; and calculating yields of the plurality of predicted flattening angles of each matching solution, to obtain the fitness score of each matching solution.

According to a third aspect, an embodiment of this application provides a production device, including: a feeding part, configured to receive a plurality of components; a processing part, configured to perform the foregoing component size grading method, and determine a matching solution of a preset assembly; a sorting part, configured to match the plurality of components based on the matching solution of the preset assembly; and a discharging part, configured to output the plurality of components on which matching is completed.

In a possible implementation, the production device further includes: a measurement part, configured to measure a plurality of pieces of size data of the plurality of components, and send the measured plurality of pieces of size data of the plurality of components to the processing part.

In a possible implementation, the production device further includes: an assembly part, configured to assemble the plurality of components on which matching is completed into the preset assembly.

According to a fourth aspect, an embodiment of this application provides a production device, including: a feeding part, configured to receive a plurality of first components and a plurality of second components; a processing part, configured to perform the foregoing component size grading method, and determine matching solutions of a plurality of preset assemblies; a sorting part, configured to match the plurality of first components and the plurality of second components based on the matching solutions of the plurality of preset assemblies; and a discharging part, configured to output the plurality of first components and the plurality of second components on which matching is completed.

According to a fifth aspect, this application provides a computer storage medium. The computer storage medium stores program instructions. The program instructions, when run on a production device, causes a processor of the production device to perform the foregoing component size grading method.

In addition, for technical effects brought by the second aspect to the fifth aspect, refer to the descriptions related to the methods of the designs in the foregoing method part. Details are not described herein again.

### BRIEF DESCRIPTION OF DRAWINGS

FIG. 1 is a three-dimensional diagram of a terminal device in a folded state according to an embodiment of this application;
FIG. 2 is a three-dimensional diagram of a terminal device in a flattened state according to an embodiment of this application;
FIG. 3 is a three-dimensional diagram of another foldable terminal device according to an embodiment of this application;
FIG. 4 is a flowchart of a component size grading method according to an embodiment of this application;
FIG. 5 is a flowchart of a component size grading method according to another embodiment of this application;
FIG. 6 is a flowchart of a component size grading method according to another embodiment of this application;
FIG. 7 is a flowchart of feature extraction according to an embodiment of this application;
FIG. 8 is a flowchart of model training according to an embodiment of this application;
FIG. 9 is a three-dimensional diagram of a primary swing arm according to an embodiment of this application;
FIG. 10 to FIG. 12 are three-dimensional diagrams of a base according to an embodiment of this application;
FIG. 13 is a three-dimensional diagram of a secondary swing arm according to an embodiment of this application;
FIG. 14 to FIG. 16 are three-dimensional diagrams of a wedge-shaped block according to an embodiment of this application;
FIG. 17 is a schematic structural diagram of a preset deep learning model according to an embodiment of this application;
FIG. 18 is a flowchart of optimization of a grading level and a grading threshold according to an embodiment of this application;
FIG. 19 is a schematic diagram of a grading level and a grading threshold according to an embodiment of this application;
FIG. 20 is a schematic architectural diagram of a production device according to an embodiment of this application; and
FIG. 21 is a schematic diagram of an application scenario of a component size grading method according to an embodiment of this application.

### DESCRIPTION OF EMBODIMENTS

The terms "first" and "second" involved in embodiments of this application are merely used for the purpose of description, but cannot be understood as indicating or implying relative importance or implicitly specifying the quantity of the indicated technical features. Therefore, features defined by "first" and "second" may explicitly or implicitly include one or more features. In the descriptions of embodiments of this application, the terms such as "exemplary" or "for example" are used to represent giving an example, an illustration, or a description. Any embodiment or design solution described as "exemplary" or "for example" in embodiments of this application does not need to be construed as being preferred over or offering advantages over other embodiments or design solutions. Exactly, the terms such as "exemplary" or "for example" are intended to present related concepts in a specific manner.

Unless otherwise defined, meanings of all the technical and scientific terms used herein are the same as those usually understood by persons skilled in the art to which this application belongs. The terms used in the specification of this application are merely intended to describe specific embodiments, and are not intended to limit this application. It should be understood that in this application, unless otherwise specified, "/" represents "or". For example, A/B may represent A or B. In this application, "and/or" describes only an association relationship for describing associated objects and represents that three relationships may exist. For example, A and/or B may represent the following cases: Only A exists, both A and B exist, and only B exists. "At least one" means one or more. "A plurality of" means two or more. For example, at least one of a, b, or c may represent the following seven cases: a, b, c, a and b, a and c, b and c, and a, b, and c. The following embodiments and features in the embodiments may be combined with each other without conflict.

For ease of understanding, some concepts related to embodiments of this application are exemplarily described for reference.

Finite element simulation: Finite element simulation is a numerical simulation method, where a continuum is considered as a discrete set of a finite quantity of interconnected units arranged in a specific manner, and is used for solving thermal, mechanical, and electromagnetic problems in the continuum. The finite element simulation is based on a finite element method, where a complex structure or system is decomposed into a finite quantity of simple elements, and numerical calculation is performed through these elements to obtain a behavior of an overall system.

Monte Carlo sampling: Monte Carlo sampling may also be referred to as a statistical simulation sampling method, which is a method for approximate numerical calculation through random sampling from a probability model. Specifically, simulation refers to replacing or simulating a feature or a part of states of a real or abstract system with another system (referred to as a simulation model). To resolve a problem, the problem is converted into a problem of solving the probability model, a large quantity of random numbers that conform to the model are then generated, and the generated random numbers are analyzed to resolve the problem. Such a method is referred to as a random simulation sampling method, and is also referred to as a Monte Carlo sampling method.

Tolerance: A tolerance is an allowable variation of an actual parameter value. Parameters may be geometric parameters during mechanical processing, or may be parameters in disciplines such as physics, chemistry, and electricity. For mechanical manufacturing, an objective of establishing tolerances is to determine geometrical parameters of a product, so that variations of the geometrical parameters are within a specific range, to satisfy an interchange or coordination requirement.

Degree of position tolerance: Degree of position tolerance is used to specify an allowable range of a position tolerance or a position deviation of a part.

Flattening angle: A flattening angle is a parameter for describing a displacement relationship in a force-bearing state, and is frequently used in mechanical engineering and structural analysis in particular. The flattening angle describes a case in which an object is distorted or deviated under the action of a force, and a deformation state of a structure can be learned through the flattening angle.

In a process of assembling a plurality of components into a mechanical assembly, matching of components of different sizes may affect an assembly yield of the mechanical assembly. Therefore, it is necessary to perform tolerance grading on a component size of the mechanical assembly. However, in the related art, a method for determining a component size grading solution of a mechanical assembly through tolerance grading is complex and time-consuming.

With the development of intelligent terminal technologies, users' demand for large-screen terminals is becoming increasingly strong. However, due to a large screen size, the large-screen terminal is inconvenient to be carried. A foldable terminal device adopts a screen folding manner, so that the screen size is increased without significantly increasing the entire size of the device, which becomes a current mainstream solution for the large-screen terminal.

The foldable terminal device usually uses a hinge assembly to implement a folding function. However, in a process of assembling the foldable terminal device, the hinge assembly is prone to defects such as being insufficiently unfolded or excessively unfolded. In this case, a production yield of the hinge assembly is low, and consequently, a production yield of the foldable terminal device is low.

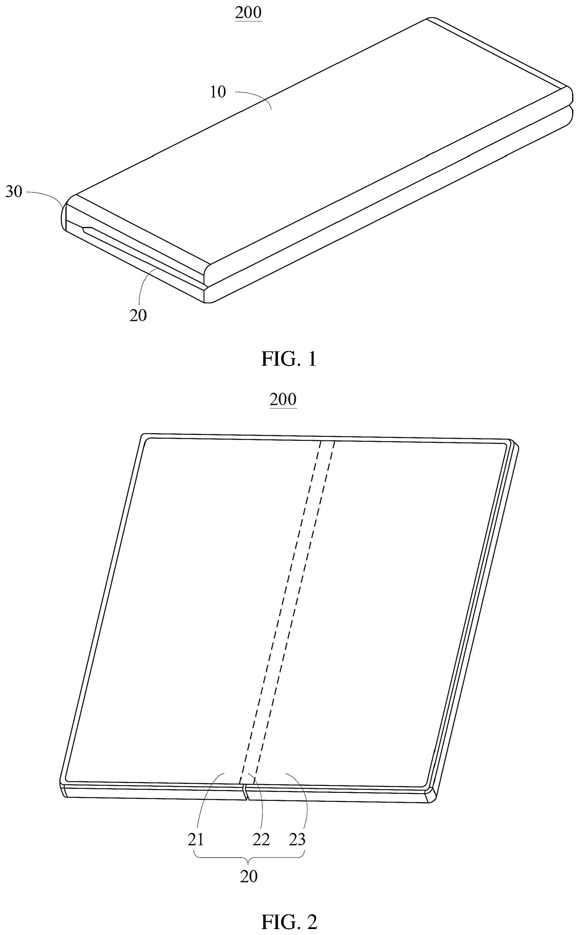

FIG. 1 is a three-dimensional diagram of a terminal device in a folded state according to an embodiment of this application. The terminal device 200 provided in this embodiment of this application is a foldable terminal device, including a first display screen 10, a second display screen 20, and a hinge assembly 30. The first display screen 10 is an outer screen of the terminal device 200, the second display screen 20 is an inner screen of the terminal device 200, and the terminal device 200 is in a folded state or a flattened state based on rotation of the hinge assembly 30. In the folded state, the terminal device 100 uses the first display screen 10.

FIG. 2 is a three-dimensional diagram of a terminal device in a flattened state according to an embodiment of this application. A user may drive the hinge assembly 30 to rotate, to control the terminal device 200 to change from the folded state shown in FIG. 1 to the flattened state shown in FIG. 2. In the flattened state, the terminal device 100 uses the second display screen 20, and the second display screen 20 includes a first display area 21, a second display area 22, and a third display area 23.

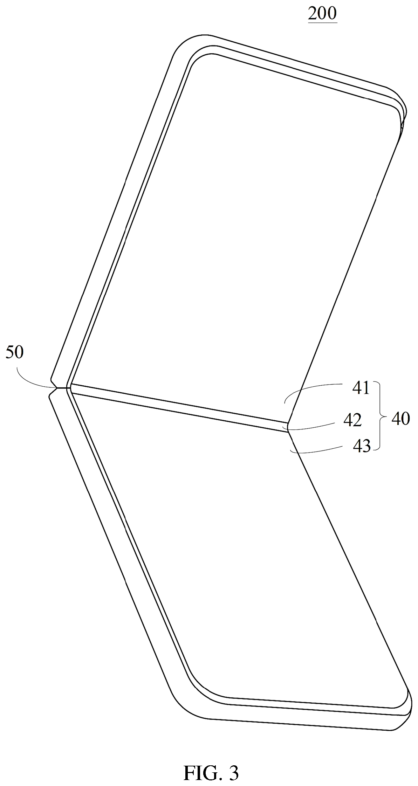

FIG. 3 is a three-dimensional diagram of another foldable terminal device according to an embodiment of this application. The terminal device 200 includes a display screen 40 and a hinge assembly 50. The display screen 40 includes a first display area 41, a second display area 42, and a third display area 43.

Using an example in which the mechanical assembly is the hinge assembly of the foldable terminal device, the hinge assembly is an important part that can implement a folding function and a flattening function of the foldable terminal device. However, in a process of assembling the foldable terminal device, limited by an assembly technology, the assembled hinge assembly is prone to defects such as being insufficiently unfolded and excessively unfolded, resulting in a low mass production yield of the hinge assembly. That the hinge assembly is insufficiently unfolded or excessively unfolded may cause a problem that the display screen of the foldable terminal device is correspondingly insufficiently unfolded or excessively unfolded. That the display screen is insufficiently unfolded means that a flattening angle of the display screen of the foldable terminal device in the flattened state is less than 180 degrees, that is, an angle between the first display area 21 or the third display area 23 and the second display area 22 is less than 180 degrees. That the display screen is excessively unfolded means that a flattening angle of the display screen of the foldable terminal device in the flattened state is greater than 180 degrees, that is, an angle between the first display area 21 or the third display area 23 and the second display area 22 is greater than 180 degrees. Being insufficiently unfolded and excessively unfolded both cause the display screen of the foldable terminal device in the flattened state to be uneven, affecting an effect of displaying images in the display areas, and reducing user experience.

Due to a low precision assembly threshold and large processing tolerances of materials, a blind assembly method cannot be used for assembly of the current foldable terminal devices, and a tolerance grading technology needs to be used. However, the structure of the hinge assembly is complex, the flattening angle is easily affected by a plurality of factors such as material deformation and processing tolerance fluctuation, and therefore, the technical difficulty of establishing a highly accurate automatic grading solution is considerable. In a solution of performing grading and matching based on conventional tolerance simulation, a grading threshold requires stepwise calculation through design of experiments (Design of Experiments, DOE), and continuous debugging is required to find a threshold having an optimal yield. The calculation method is not intelligent enough, a long calculation period (for example, two days) is required each time, and calculation time is long. In addition, a gradient of the stepwise calculation through the DOE is large. For example, when 10% is used as a threshold step, an optimal threshold solution is easily missed.

To resolve the foregoing problem, an embodiment of this application provides a component size grading method. In the component size grading solution, intelligent and automatic optimization is performed, thereby reducing difficulty of implementing component size grading, reducing time required for determining a component size grading solution of a mechanical assembly, and effectively improving an assembly yield of the mechanical assembly, for example, improving a yield of a flattening angle of a hinge assembly.

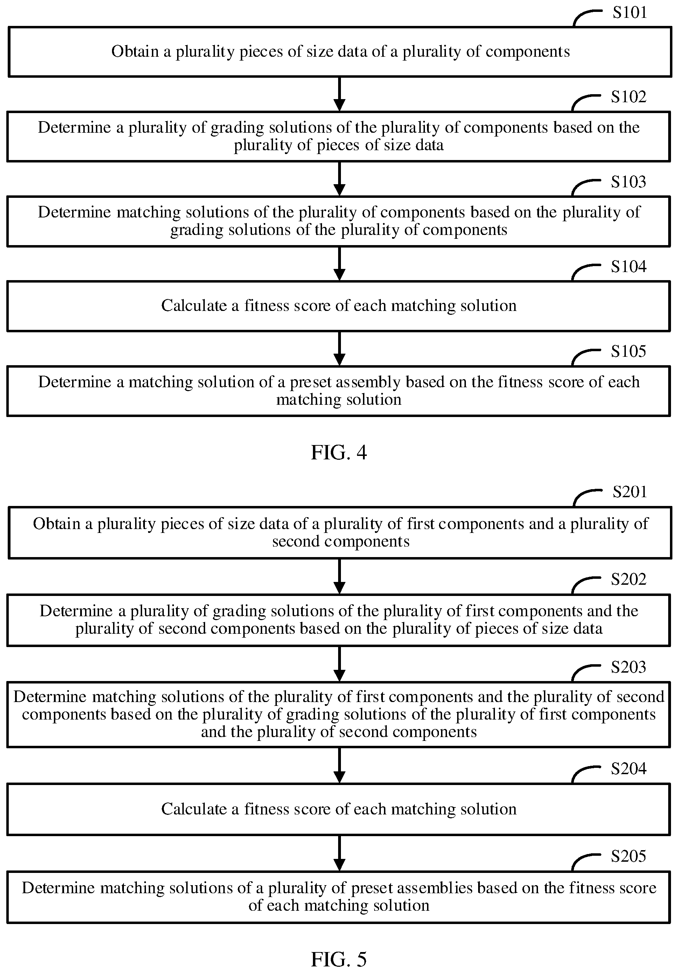

FIG. 4 is a flowchart of a component size grading method according to an embodiment of this application. The method is applied to a production device, and the component size grading method includes the following steps.

S101: Obtain a plurality of pieces of size data of a plurality of components.

In an embodiment of this application, the plurality of pieces of size data of the plurality of components may be obtained through measurement by using a measurement device. In another embodiment of this application, a memory of the production device may alternatively store a plurality of pieces of size data of a plurality of components in advance. In this way, the plurality of pieces of size data of the plurality of components may be obtained from the memory of the production device. In another embodiment of this application, the production device may alternatively receive a plurality of pieces of size data of a plurality of components that are input. In an embodiment of this application, the plurality of components may be components for assembling into a preset assembly. For example, the preset assembly is a hinge assembly of a foldable terminal device. The plurality of components include a primary swing arm, a base, a secondary swing arm, and a wedge-shaped block of the hinge assembly.

S102: Determine a plurality of grading solutions of the plurality of components based on the plurality of pieces of size data.

In an embodiment of this application, grading levels of the plurality of pieces of size data of the plurality of components and a grading threshold of each level are set, and the grading levels of the plurality of pieces of size data of the plurality of components and the grading threshold of each level are determined as the plurality of grading solutions of the plurality of components.

S103: Determine matching solutions of the plurality of components based on the plurality of grading solutions of the plurality of components.

In an embodiment of this application, a quantile corresponding to each grading threshold of the plurality of pieces of size data of the plurality of components is determined based on an inverse cumulative distribution function, the plurality of pieces of size data of the plurality of components are grouped based on the quantile corresponding to each grading threshold, and grouped size data of different components is matched, to obtain matching solutions of the plurality of pieces of size data of the plurality of components.

S104: Calculate a fitness score of each matching solution.

In an embodiment of this application, the fitness score of each matching solution is calculated based on the grouped size data of the different components by using a fitness function. The grouped size data of the different components that corresponds to each matching solution is input into a prediction model, to obtain a plurality of prediction results of each matching solution. The fitness score of each matching solution is obtained based on the plurality of prediction results of each matching solution by using the fitness function.

In an embodiment of this application, the preset assembly is a hinge assembly, the hinge assembly has a flattening angle in a flattened state, the fitness function is a yield calculation formula for all flattening angle prediction values in a matching solution, and the prediction model is a flattening angle prediction model. The grouped size data of the different components that corresponds to each matching solution is input into the flattening angle prediction model, to obtain a plurality of predicted flattening angles of each matching solution. Yields of the plurality of predicted flattening angles of each matching solution are calculated, to obtain the fitness score of each matching solution.

S105: Determine a matching solution of the preset assembly based on the fitness score of each matching solution.

In an embodiment of this application, when a fitness score of any matching solution is greater than or equal to a preset fitness score threshold, the any matching solution is determined as the matching solution of the preset assembly. In another embodiment of this application, a matching solution with a highest fitness score in a plurality of matching solutions may alternatively be determined as the matching solution of the preset assembly.

In an embodiment of this application, the component size grading method further includes: extracting a plurality of features affecting the flattening angle of the hinge assembly, where the plurality of features include a plurality of pieces of size data of a plurality of components of the hinge assembly; and establishing the flattening angle prediction model based on the plurality of features and flattening angle data.

In an embodiment of this application, the extracting a plurality of features affecting the flattening angle of the hinge assembly includes: obtaining force information of the plurality of components of the hinge assembly in the flattened state; obtaining sampled data corresponding to the size data of the components based on the force information of the components of the hinge assembly in the flattened state; and performing regression analysis on the sampled data corresponding to the size data of the components, to obtain the plurality of features affecting the flattening angle of the hinge assembly.

In an embodiment of this application, the performing regression analysis on the sampled data corresponding to the size data of the components, to obtain the plurality of features affecting the flattening angle of the hinge assembly includes: standardizing the sampled data; dividing the sampled data into a training set, and training and fitting a Lasso regression model by using the training set; obtaining coefficients of all the sampled data based on the trained Lasso regression model; and using absolute values of the coefficients as degrees of contribution of the size data of the components to the flattening angle, sorting the size data of the components in descending order based on the degrees of contribution, and selecting, based on a preset percentage, a plurality of pieces of top-ranked size data, to obtain the plurality of features.

In an embodiment of this application, the establishing the flattening angle prediction model based on the plurality of features and flattening angle data includes: training a preset deep learning model based on the plurality of features and the flattening angle data, to obtain the flattening angle prediction model.

In an embodiment of this application, the training a preset deep learning model based on the plurality of features and the flattening angle data, to obtain the flattening angle prediction model includes: establishing a training sample set based on a plurality of groups of features and flattening angle data corresponding to each group of features; inputting a group of features and corresponding flattening angle data that are in the training sample set and that are used as training data into the preset deep learning model, and calculating a loss function value of the preset deep learning model; and adjusting parameters of the preset deep learning model when the loss function value of the preset deep learning model is greater than a preset value, continuing to train the preset deep learning model, until the loss function value of the preset deep learning model is less than or equal to the preset value, determining that training of the preset deep learning model is completed, and determining the preset deep learning model whose training is completed as the flattening angle prediction model.

FIG. 5 is a flowchart of a component size grading method according to another embodiment of this application. The method is applied to a production device, and the component size grading method includes the following steps.

S201: Obtain a plurality of pieces of size data of a plurality of first components and a plurality of second components.

S202: Determine a plurality of grading solutions of the plurality of first components and the plurality of second components based on the plurality of pieces of size data.

S203: Determine matching solutions of the plurality of first components and the plurality of second components based on the plurality of grading solutions of the plurality of first components and the plurality of second components.

S204: Calculate a fitness score of each matching solution.

S205: Determine matching solutions of a plurality of preset assemblies based on the fitness score of each matching solution, where each preset assembly includes a first component and a second component.

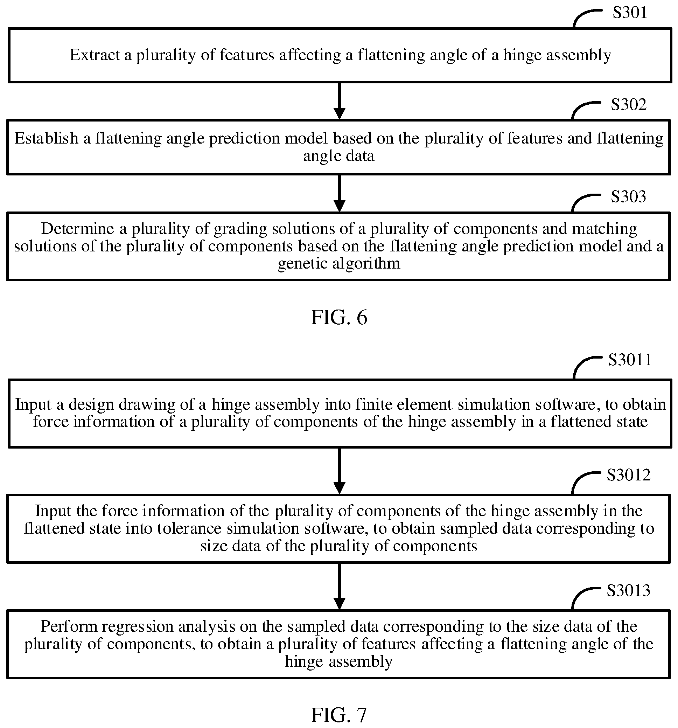

FIG. 6 is a flowchart of a component size grading method according to another embodiment of this application. The method is applied to a production device, and the component size grading method includes the following steps.

S301: Extract a plurality of features affecting a flattening angle of a hinge assembly, where the plurality of features include size data of a plurality of components.

In an embodiment of this application, the plurality of features affecting the flattening angle of the hinge assembly are extracted based on a design drawing of the hinge assembly. The design drawing of the hinge assembly is a three-dimensional model image, and is generated by performing proportionally drawing in advance based on a standard-sized hinge assembly. The design drawing of the hinge assembly is input into finite element simulation software. Through the finite element simulation software, force-bearing analysis is performed on a plurality of components of the hinge assembly in a flattened state, to determine force information of the plurality of components, where the force information of the plurality of components includes a force-bearing contact point and a force-bearing deformation amount. The force-bearing contact points and the force-bearing deformation amounts of the plurality of components are input into tolerance simulation software, Monte Carlo sampling is performed on the size data of the plurality of components through the tolerance simulation software, and sampled data corresponding to the size data of the plurality of components is determined. Regression analysis is performed on the sampled data, to determine a plurality of features in the sampled data. The features include the size data of the plurality of components. For example, the size data includes degree of position tolerances of the components.

S302: Establish a flattening angle prediction model based on the plurality of features and flattening angle data.

In an embodiment of this application, a preset deep learning model is trained based on the plurality of features and the flattening angle data, to obtain the flattening angle prediction model. The preset deep learning model is a fully-connected neural network model, and the plurality of features and the flattening angle data are training data of the fully-connected neural network model. The plurality of features are used as input data of the fully-connected neural network model, the flattening angle data is used as output data of the fully-connected neural network model, the fully-connected neural network model is trained, and the fully-connected neural network model whose training is completed is used as the flattening angle prediction model. In another embodiment of this application, the preset deep learning model may alternatively be another type of machine learning model, for example, a convolutional neural network model.

S303: Determine a plurality of grading solutions of the plurality of components and matching solutions of the plurality of components based on the flattening angle prediction model and a genetic algorithm. The grading solution includes a grading level and a grading threshold of size data of each component. The matching solution includes level matching of size data of different components.

In an embodiment of this application, the grading level of the size data of each component is customized, and may be, for example, set as 2 to n levels, where n may be an integer greater than 2. The grading threshold of the size data of each component is traversed; a quantile of a grading threshold of each customized grading is determined based on an inverse cumulative distribution function; Monte Carlo sampling calculation of different grading thresholds is performed based on the genetic algorithm; size data of different levels of the plurality of components is matched; the matched size data of different levels of the plurality of components is input into the flattening angle prediction model, to obtain corresponding predicted flattening angles; a comprehensive failure rate after the levels are matched with each other is determined based on the predicted flattening angles and a preset flattening angle range; and an optimal grading solution and matching solution are determined based on a minimum value of the comprehensive failure rate.

In the foregoing embodiments of this application, the plurality of features affecting the flattening angle of the hinge assembly are determined through finite element force-bearing analysis, Monte Carlo sampling, and regression analysis. In addition, the preset deep learning model is trained based on the features, to establish the flattening angle prediction model. Automatic optimization is performed on the grading solutions and the matching solutions of the size data of the components based on the flattening angle prediction model and the genetic algorithm, thereby improving efficiency and accuracy of grading the size data of the hinge assembly, and effectively improving an assembly yield of the hinge assembly.

FIG. 7 is a flowchart of feature extraction according to an embodiment of this application.

S3011: Input the design drawing of the hinge assembly into the finite element simulation software, to obtain the force information of the plurality of components of the hinge assembly in the flattened state.

In an embodiment of this application, the design drawing of the hinge assembly is a finite element model that is generated by performing proportionally drawing in advanced based on the standard-sized hinge assembly. For example, the finite element simulation software may be ANSYS software or Abaqus software, and can perform force-bearing analysis on the plurality of components of the hinge assembly in the flattened state, to determine the force information of the plurality of components of the hinge assembly. The flattened state means that the flattening angle of the hinge assembly is 180 degrees, and the force information of the plurality of components includes, but is not limited to: the force-bearing contact point mᵢ and the force-bearing deformation amount δᵢ of the component, where the force-bearing contact point mᵢ is represented by using three-dimensional coordinate values in a three-dimensional rectangular coordinate system, and the three-dimensional rectangular coordinate system may be established based on a position of the hinge assembly. In an embodiment of this application, the plurality of components of the hinge assembly include, but are not limited to: a primary swing arm, a secondary swing arm, a base, a wedge-shaped block, a hinge, a spindle, a support portion, and a slide block.

In an embodiment of this application, a geometrical model of the hinge assembly (for example, the design drawing of the hinge assembly) is created or imported by using the finite element simulation software. The geometrical model of the hinge assembly is discretized into a finite element grid. Material properties such as an elastic modulus, a Poisson's ratio, and a density are defined for each component of the hinge assembly, and these properties determine a response of a material to an external load. Boundary conditions and loading are defined on the finite element model of the hinge assembly. The boundary conditions and loading include a constraint condition (for example, a fixed support or an axial constraint) and a loading condition (for example, a force, a pressure, or a temperature). The boundary conditions and loading in this embodiment of this application are that the hinge assembly is in the flattened state. The finite element model of the hinge assembly is solved in a numerical method (for example, the finite element method), to resolve a system of linear or non-linear equations on the grid, to obtain node displacement and stress distribution in the finite element model. The results are visualized and analyzed through the finite element simulation software. A force-bearing condition and a deformation form of the hinge assembly under a given load (that is, in the flattened state) are evaluated by viewing the results such as displacement, stress, and deformation, to obtain a contact condition between the plurality of components of the hinge assembly and force-bearing deformation amounts of the plurality of components. The contact condition between the plurality of components is represented by the force-bearing contact points.

S3012: Input the force information of the plurality of components of the hinge assembly in the flattened state into the tolerance simulation software, to obtain the sampled data corresponding to the size data of the plurality of components.

In an embodiment of this application, the tolerance simulation software is Monte Carlo simulation software. Monte Carlo sampling is performed a preset quantity of times on the size data of the plurality of components through the tolerance simulation software based on the force information of the plurality of components of the hinge assembly in the flattened state, to obtain the sampled data corresponding to the size data of the plurality of components. For example, the preset quantity of times is one million times, 1.2 million times, or another quantity of times. This is not limited in this embodiment of this application. The size data of the plurality of components includes, but is not limited to: degree of position tolerances of surfaces of the components.

In an embodiment of this application, the force information of the plurality of components that is used as a virtual feature is input into three-dimensional tolerance simulation software for a mechanism, size data of each component matching force information of a corresponding component is output through the tolerance simulation software, and Monte Carlo sampling is performed a preset quantity of times on the size data of each component matching the force information of the corresponding component, to obtain sampled data corresponding to the size data of each component.

S3013: Perform regression analysis on the sampled data corresponding to the size data of the plurality of components, to obtain the plurality of features affecting the flattening angle of the hinge assembly.

In an embodiment of this application, regression analysis is performed, by using a preset regression analysis model, on the sampled data corresponding to the size data of the plurality of components, to obtain a degree of contribution of each piece of size data of each component; key impact factors are identified, and the plurality of pieces of size data of the plurality of components are sorted in descending order based on the degrees of contribution, that is, the plurality of pieces of size data of the plurality of components are sorted in descending order based on the degrees of contribution; and pieces of top-ranked size data of the components are used, based on a preset percentage, as the features affecting the flattening angle of the hinge assembly. For example, the preset regression analysis model is a LASSO (Lasso) regression analysis model, and the preset percentage is 90%, 95%, or another percentage.

In an embodiment of this application, the sampled data is standardized. For example, the sampled data is standardized to have an average value of 0 and a standard deviation of 1, to eliminate differences between metric units and ratios of different feature variables. The sampled data is divided into a training set and a test set. The training set includes a plurality of groups of training data. Input data of each group of training data is the sampled data, that is, the size data of the component, and output data is the flattening angle of the hinge assembly. The test set includes a plurality of groups of test data, input data of each group of test data is the sampled data, that is, the size data of the component, and output data is the flattening angle of the hinge assembly. The LASSO regression model is fitted and trained by using the training set. In the fitting process, feature sparsity is controlled by adjusting L1 regularization parameters. For example, an optimal L1 regularization parameter may be found in methods such as cross validation or grid search. Coefficients of all the features are obtained based on the trained Lasso regression model, absolute values of the coefficients are sorted in descending order, and the features are selected. Performance of the model is evaluated by using the test set. For example, the performance of the model is evaluated by using metrics such as a root mean square error (RMSE) and an R-squared value.

In an embodiment of this application, the absolute value of the coefficient is used as the degree of contribution of each feature (that is, the size data of each component) to the flattening angle of the hinge assembly, the plurality of features are sorted in descending order based on the degrees of contribution, and the top-ranked features are selected based on the preset percentage, to obtain the final features.

In the foregoing embodiments of this application, the plurality of features affecting the flattening angle of the hinge assembly can be accurately selected through finite element force-bearing analysis, Monte Carlo sampling, and regression analysis.

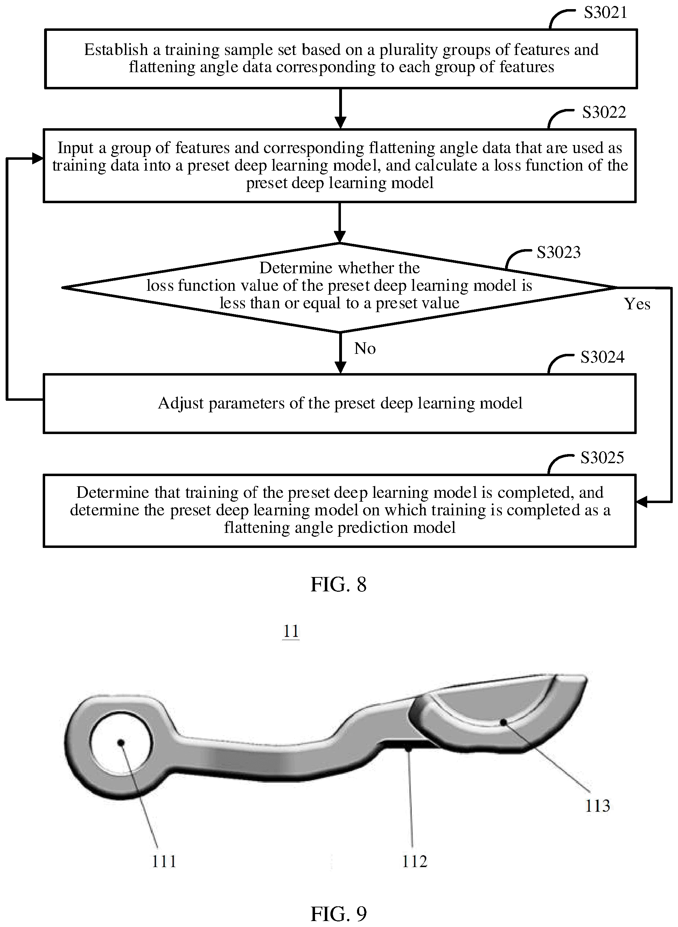

FIG. 8 is a flowchart of model training according to an embodiment of this application.

S3021: Establish a training sample set based on a plurality of groups of features and flattening angle data corresponding to each group of features.

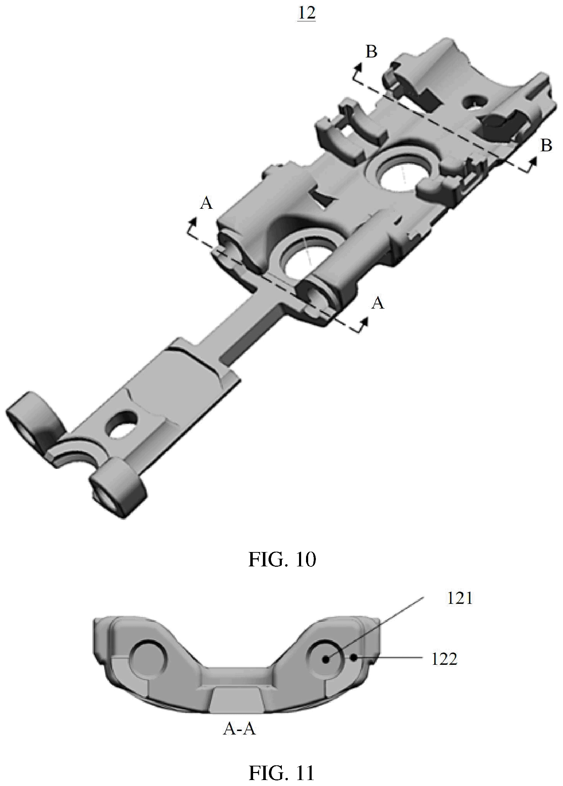

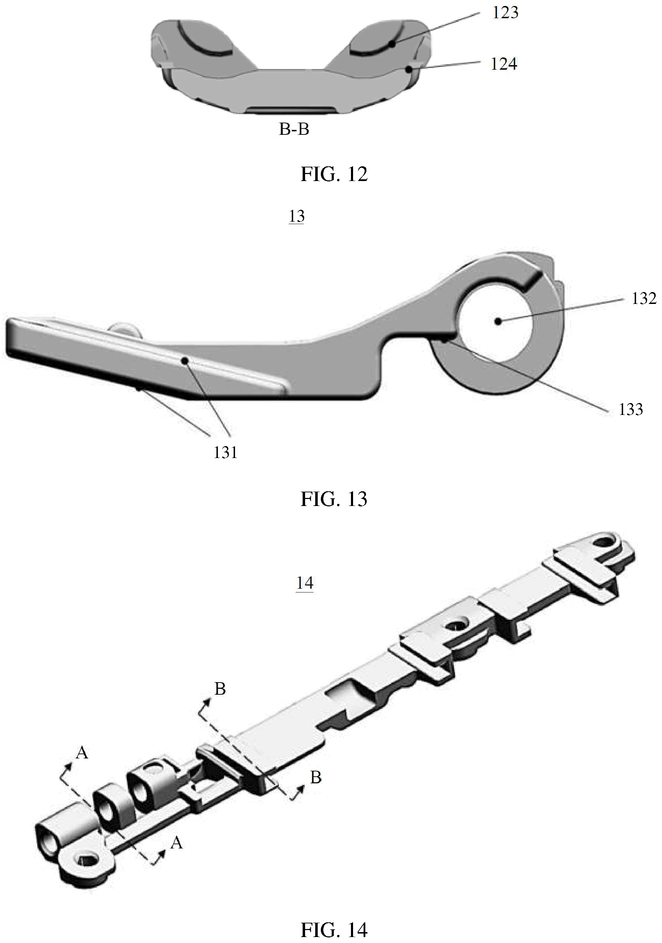

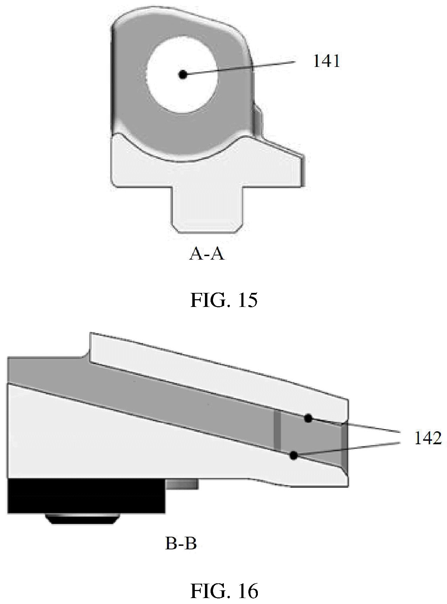

In an embodiment of this application, a feature corresponding to each piece of flattening angle data includes the size data of the plurality of components, and the size data of the component is size data of a key structural feature surface of the component. For example, the plurality of components include a primary swing arm A, a base B, a secondary swing arm C, and a wedge-shaped block D. FIG. 9 is a three-dimensional diagram of a primary swing arm according to an embodiment of this application. Size data of a key structural feature surface of the primary swing arm 11 includes a degree of position tolerance A1 of a mating hole 111 between the primary swing arm and a wedge-shaped block, a degree of position tolerance A2 of a stop surface 112 between the primary swing arm and a base, and a degree of position tolerance A3 of a mating arc surface 113 between the primary swing arm and the base. FIG. 10 to FIG. 12 are three-dimensional diagrams of a base according to an embodiment of this application. Size data of a key structural feature surface of the base 12 includes a degree of position tolerance B1 of a mating hole pin 121 between the base and a secondary swing arm, a degree of position tolerance B2 of a stop surface 122 between the base and the secondary swing arm, a degree of position tolerance B3 of a mating arc surface 123 between the base and a primary swing arm, and a degree of position tolerance B4 of a stop surface 124 between the base and the primary swing arm. FIG. 13 is a three-dimensional diagram of a secondary swing arm according to an embodiment of this application. Size data of a key structural feature surface of the secondary swing arm 13 includes a degree of position tolerance C1 of a mating surface 131 between the secondary swing arm and a wedge-shaped block, a degree of position tolerance C2 of a stop surface 132 between the secondary swing arm and a base, and a degree of position tolerance C3 of a mating hole 133 between the secondary swing arm and the base. FIG. 14 to FIG. 16 are three-dimensional diagrams of a wedge-shaped block according to an embodiment of this application. Size data of a key structural feature surface of the wedge-shaped block 14 includes a degree of position tolerance D1 of a mating hole 141 between the wedge-shaped block and a primary swing arm, and a degree of position tolerance D2 of a mating surface 142 between the wedge-shaped block and a secondary swing arm.

S3022: Input a group of features and corresponding flattening angle data that are as training data into the preset deep learning model, and calculate a loss function value of the preset deep learning model.

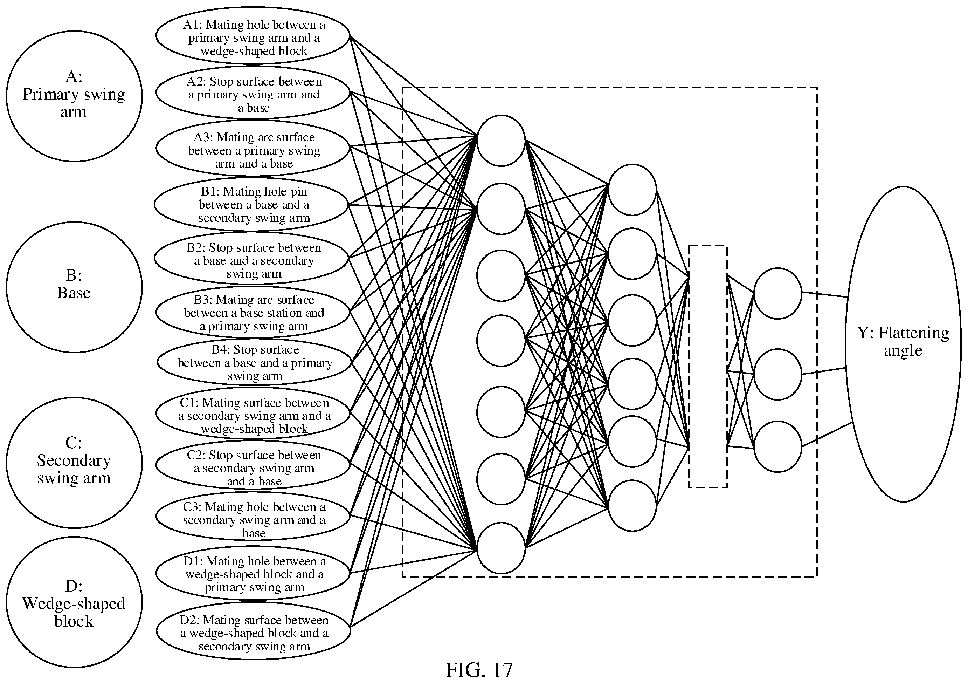

FIG. 17 is a schematic structural diagram of a preset deep learning model according to an embodiment of this application. In an embodiment of this application, the preset deep learning model is a fully-connected neural network model (also referred to as a multilayer perceptron). The fully-connected neural network model is initialized, the fully-connected neural network model is imported into a deep learning framework, and initial parameters are set. Then, the group of features are used as input data of the fully-connected neural network model, the flattening angle data is used as output data of the fully-connected neural network model, the fully-connected neural network model is trained, and the loss function of the preset deep learning model is calculated.

In an embodiment of this application, the fully-connected neural network model includes an input layer, two hidden layers, and an output layer. The input layer includes 34 neurons, which correspond to a 1^{st} parameter of a linear transformation function nn.Linear(34,128). A first hidden layer is a fully-connected layer, is defined by a linear transformation function self.fc1=nn.Linear(34,128), and includes 128 neurons. The first hidden layer further includes a Dropout layer (self.dropout1=nn.Dropout(p=0.5)), configured to reduce overfitting. A second hidden layer is also a fully-connected layer, is defined by a linear transformation function self.fc2=nn.Linear(128,64), and includes 64 neurons. The second hidden layer also includes a Dropout layer (self.dropout2=nn.Dropout(p=0.5)), configured to reduce overfitting. An output layer is also a fully-connected layer, is defined by a linear transformation function self.fc3=nn.Linear(64, 1), includes one neuron, and is configured to generate a final output of the fully-connected neural network model.

In an embodiment of this application, an activation function of the fully-connected neural network model is self.relu=nn.ReLU(), and operation code of the fully-connected neural network model is:

```
         def__init__(self):
             super(Net,self).__init__();
             self.fc1=nn.Linear(34,128);
             self.dropout1=nn.Dropout(p=0.5);
             self.fc2=nn.Linear(128,64);
             self.dropout2=nn.Dropout(p=0.5);
             self.fc3=nn.Linear(64,1);
             self.relu=nn.ReLU().
```

In an embodiment of this application, the loss function of the preset deep learning model is a data loss (Data loss), and the data loss is a mean square error (MSE) between a predicted flattening angle and actual flattening angle data.

S3023: Determine whether the loss function value of the preset deep learning model is less than or equal to a preset value. S3024 is performed when the loss function value of the preset deep learning model is greater than the preset value; or S3025 is performed when the loss function value of the preset deep learning model is less than or equal to the preset value.

S3024: Adjust parameters of the preset deep learning model, and then return to perform S3022. The parameters of the fully-connected neural network model include a connection weight between different layers, a bias value of each neuron, and the like.

S3025: Determine that training of the preset deep learning model is completed, and determine the preset deep learning model whose training is completed as the flattening angle prediction model.

In an embodiment of this application, when the loss function of the preset deep learning model is less than or equal to the preset value, it is determined that the preset deep learning model converges, and further, it is determined that training of the preset deep learning model is completed.

In the foregoing embodiments of this application, the neural network model is trained by using the features and the flattening angle data of the hinge assembly, to obtain the flattening angle prediction model. The size data of the components of the hinge assembly is input into the flattening angle prediction model, so that corresponding predicted flattening angle data can be quickly obtained, thereby improving efficiency of calculating the flattening angle data.

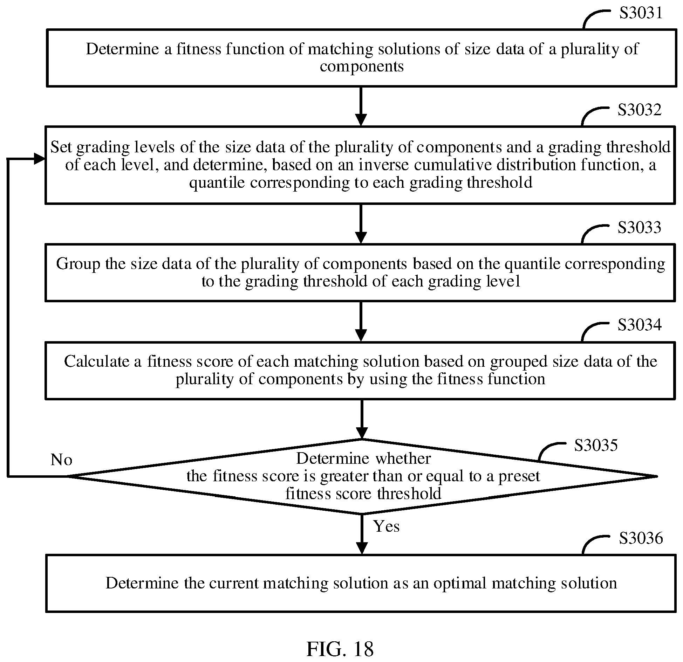

FIG. 18 is a flowchart of optimization of a grading level and a grading threshold according to an embodiment of this application.

S3031: Determine a fitness function of the matching solutions of the size data of the plurality of components.

In an embodiment of this application, the fitness function of the matching solutions of the size data of the plurality of components is determined as a yield calculation formula for all flattening angle prediction values in the matching solution, and the yields of all the flattening angle prediction values corresponding to each matching solution are used as a fitness score. A plurality of flattening angle prediction values corresponding to each matching solution may be obtained by inputting the size data of the plurality of components corresponding to each matching solution into the flattening angle prediction model. Whether each flattening angle prediction value falls within a preset flattening angle range is determined. When the flattening angle prediction value falls within the preset flattening angle range, it is determined that the flattening angle prediction value is qualified. When the flattening angle prediction value does not fall within the preset flattening angle range, it is determined that the flattening angle prediction value is unqualified. A ratio of all the qualified flattening angle prediction values to all the flattening angle prediction values is calculated, to obtain the yields of all the flattening angle prediction values. The matching solution includes level matching of size data of different components. For example, the preset flattening angle range is 180.2 degrees to 181.8 degrees, that is, greater than or equal to 180.2 degrees and less than or equal to 181.8 degrees.

In another embodiment of this application, the fitness function of the matching solutions of the size data of the plurality of components may alternatively be a reciprocal of a sum of mean square errors of the size data within each grading of each component in the matching solution, a reciprocal of a sum of standard deviations of the size data within each grading of each component in the matching solution, and a sum of the yields of all the flattening angle prediction values.

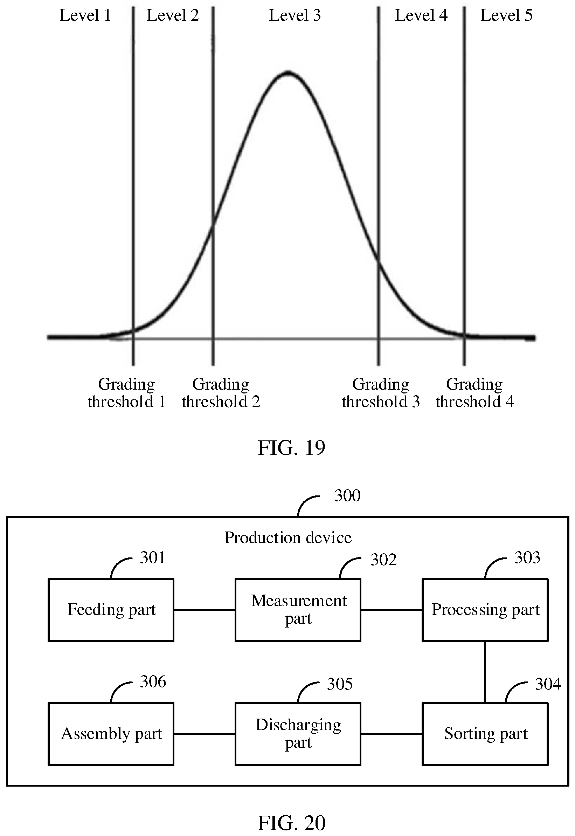

In an embodiment of this application, a quantity of grading levels of the size data of the components is a quantity of levels after size grading, and the grading threshold is a percentage value for grading the size data. FIG. 19 is a schematic diagram of a grading level and a grading threshold according to an embodiment of this application. For example, for a plurality of pieces of size data of one component that conform to normal distribution, a quantity of grading levels is 5, and a quantity of grading thresholds is 4, that is, a grading threshold 1 is 15%, a grading threshold 2 is 30%, a grading threshold 3 is 70%, and a grading threshold 4 is 85%. Therefore, the grading levels include: The level 1 is 0 to 15%, the level 2 is 15% to 30%, the level 3 is 30% to 70%, the level 4 is 70% to 85%, and a level 5 is 85% to 100%.

S3032: Set the grading levels of the size data of the plurality of components and the grading threshold of each level, and determine a quantile corresponding to each grading threshold based on the inverse cumulative distribution function.

In an embodiment of this application, the grading levels of the size data of the plurality of components and the grading thresholds are optimized by using the genetic algorithm. First, an initial population representing different grading solutions is randomly generated. The plurality of components and the plurality of pieces of size data of each component are initialized. The grading levels of the plurality of pieces of size data of each component are customized to the level 2 to a level n level, where n is a positive integer greater than 2. For example, n is set to 4. For example, the size data of the component is a degree of position tolerance of a key structural feature surface of the component, and the key structural feature surface refers to a specific structural feature that plays an important role in the performance, reliability, or functionality of the component.

In an embodiment of this application, a target probability is determined, and size data corresponding to the target probability is calculated by using an inverse cumulative distribution function of a preset probability distribution function. The target probability is a grading threshold of a plurality of pieces of size data of one component, and the size data corresponding to each target probability is used as the quantile corresponding to the grading threshold. The plurality of pieces of size data of the initialized component conforms to the normal distribution. The inverse cumulative distribution function is an inverse cumulative distribution function corresponding to the normal distribution. The target probability is mapped to a corresponding cumulative distribution function value through the inverse cumulative distribution function, and the cumulative distribution function value is used as a quantile corresponding to each target probability. Correspondingly, the grading threshold is input into the inverse cumulative distribution function, and the quantile corresponding to the grading threshold is output through the inverse cumulative distribution function, to obtain the size data corresponding to each grading threshold in the plurality of pieces of size data.

In an embodiment of this application, after the grading levels of the size data are customized, the quantity of grading thresholds of the size data is the quantity of levels minus one. Each grading threshold of the size data of each component is traversed, and is input, as a target probability, into the inverse cumulative distribution function, to obtain the quantile corresponding to the grading threshold. A traversal manner may be traversing the grading thresholds by using an interval of a preset percentage. For example, the preset percentage is 5%. Alternatively, a traversal manner may be traversing the grading thresholds within a preset percentage range. For example, the preset percentage range is 15% to 25%.

For example, when the grading levels of the size data are customized to be 4, a quantity of grading thresholds of the size data is 3. The three grading thresholds are respectively traversed and set to 20%, 50%, and 70%, and 20%, 50%, and 70% are respectively input, as target probabilities, into the inverse cumulative distribution function corresponding to the normal distribution, to obtain a quantile corresponding to the grading threshold of 20%, a quantile corresponding to the grading threshold of 50%, and a quantile corresponding to the grading threshold of 70%.

S3033: Group the size data of the plurality of components based on the quantile corresponding to the grading threshold of each grading level.

In an embodiment of this application, the size data of the plurality of components is grouped based on the customized grading levels and the quantile corresponding to the grading threshold of each grading level. For example, a quantity of grading levels of one component is 4, and grading thresholds are respectively 20%, 50%, and 70%. Size data of the component is grouped based on a quantile corresponding to the grading threshold of 20%, a quantile corresponding to the grading threshold of 50%, and a quantile corresponding to the grading threshold of 70%, to obtain four groups of size data, which are size data between 0 and 20%, size data between 20% and 50%, size data between 50% and 70%, and size data between 70% and 100%.

S3034: Calculate a fitness score of each matching solution based on the grouped size data of the plurality of components by using the fitness function.

In an embodiment of this application, a plurality of levels of different components are arranged and combined, and matching solutions of the different components are determined. For example, a level 1 to a level 4 of a primary swing arm, a level 1 to a level 4 of a base, a level 1 to a level 4 of a secondary swing arm, and a level 1 to a level 4 of a wedge-shaped block are matched with each other, to generate a matching solution. Grouped size data of the different components that corresponds to the matching solution is input into the flattening angle prediction model, to obtain a plurality of predicted flattening angles corresponding to the matching solution. Yields of the plurality of predicted flattening angles of the matching solution are calculated, to obtain the fitness score of the matching solution. In the grading process, the levels of the different components may be freely matched, to increase a quantity of matching solutions. This is not limited by the foregoing example.

For example, grouping of size data of a primary swing arm A includes a level 1 AX1, a level 2 AX2, a level 3 AX3, and a level 4 AX4; grouping of size data of a base B includes a level 1 BX1, a level 2 BX2, a level 3 BX3, and a level 4 BX4; grouping of size data of a secondary swing arm C includes a level 1 CX1, a level 2 CX2, a level 3 CX3, and a level 4 CX4; and grouping of size data of a wedge-shaped block D includes a level 1 DX1, a level 2 DX2, a level 3 DX3, and a level 4 DX4. AX1, BX1, CX1, and DX1; AX2, BX1, CX1, and DX1; ...; and AX4, BX4, CX4, and DX4 are used as a matching solution. The matching solution includes all combinations of level matching between the primary swing arm A, the base B, the secondary swing arm C, and the wedge-shaped block D. Sampled size data is respectively selected from the size data of the plurality of components that corresponds to the matching solution in a Monte Carlo sampling manner, and the sampled size data is input into the flattening angle prediction model, to obtain a corresponding predicted flattening angle. After sampling is performed a plurality of times, all the predicted flattening angles in the matching solution are obtained. Yields of all the predicted flattening angles are calculated, and are used as the fitness score of the matching solution.

S3035: Determine whether the fitness score is greater than or equal to a preset fitness score threshold. S3036 is performed when the fitness score is greater than or equal to the preset fitness score threshold; or S3032 of resetting grading levels of size data of a plurality of components and a grading threshold of each level, and re-determining, based on the inverse cumulative distribution function, a quantile corresponding to the grading threshold of each grading level is performed when the fitness score is less than the preset fitness score threshold. The fitness score is the yields of the plurality of predicted flattening angles corresponding to the grading solution, and the preset fitness score threshold is a preset yield threshold. For example, the preset fitness score threshold is 94%, 95%, 96%, or another value.

S3036: Determine the current matching solution as an optimal matching solution.

In an embodiment of this application, an optimal matching solution includes level matching of size data of different components corresponding to the fitness score that is less than or equal to the fitness score threshold. A grading solution corresponding to the optimal matching solution is an optimal grading solution.

Based on a selection process of the genetic algorithm, individuals with good performance are selected for reproduction based on their fitness scores, and correspondingly, a matching solution with a high flattening angle yield is used as a good matching solution. Based on a crossover process of the genetic algorithm, offspring are generated by exchanging genes of parent individuals. Correspondingly, different matching solutions are obtained by adjusting level matching of size data of different components, and flattening angle yields corresponding to the different matching solutions are calculated. Based on a mutation process of the genetic algorithm, a part of genes in an individual are randomly changed, to increase genetic diversity. Correspondingly, a grading level of size data of each component and a corresponding grading threshold are adjusted, to obtain different grading solutions and matching solutions, and flattening angle yields corresponding to the different matching solutions are calculated. Based on an iteration process of the genetic algorithm, selection, crossover, and mutation processes are repeated, and a population of each generation is evaluated based on the fitness function, until a preset quantity of iterations is reached or the fitness score is stable. Correspondingly, the grading levels of the size data of the plurality of components, the grading thresholds, and level matching of the size data of the different components are continuously adjusted, to adjust the grading solutions and matching solutions of the size data of the plurality of components. The fitness score, namely, the flattening angle yield, of each matching solution is calculated, until the flattening angle yield is greater than or equal to a preset yield, and the matching solution whose flattening angle yield is greater than or equal to the preset yield is used as the optimal matching solution. Alternatively, when a quantity of times the matching solution is adjusted reaches a preset quantity of times, a matching solution with a highest flattening angle yield in a plurality of matching solutions is determined as the optimal matching solution.

In the foregoing embodiments of this application, the grading solutions and matching solutions of the size data are automatically optimized by using the genetic algorithm, thereby improving efficiency and intelligence of tolerance grading of the size data of the components of the hinge assembly.

In an embodiment of this application, the size grading method further includes: automatically assembling the hinge assembly based on the determined matching solution (for example, the optimal matching solution) of the size data of the plurality of components.

An embodiment of this application further provides a computer storage medium. The computer storage medium stores computer instructions. When the computer instructions are run on a production device, the production device is caused to perform the foregoing related method steps to implement the component size grading method in the foregoing embodiments.

Referring to FIG. 20, an embodiment of this application further provides a production device 300, including: a feeding part 301, a measurement part 302, a processing part 303, a sorting part 304, a discharging part 305, and an assembly part 306. The processing part 303 is configured to perform the foregoing component size grading method, to determine an optimal matching solution of size data of a plurality of components, namely, a matching solution of a preset assembly. The feeding part 301 includes, but is not limited to, a carrying apparatus and a conveyor belt, and is configured to receive a plurality of components to be assembled into the preset assembly, and convey the plurality of components to the measurement part 302. The measurement part 302 is in communication connection with the processing part 303, and is configured to measure size data of the plurality of components and send the measured size data of the plurality of components to the processing part 303. The sorting part 304 may be a manipulator, configured to match the plurality of components based on the matching solution of the preset assembly, and convey the plurality of components on which matching is completed to the discharging part 305. The discharging part 305 is configured to output the plurality of components on which matching is completed. The discharging part 305 may be a conveyor belt. The assembly part 306 is configured to assemble the plurality of components on which matching is completed into the preset assembly. In other embodiments of this application, the production device 300 may not include the measurement part 302, and the size data of the plurality of components may be obtained through measurement in advance.

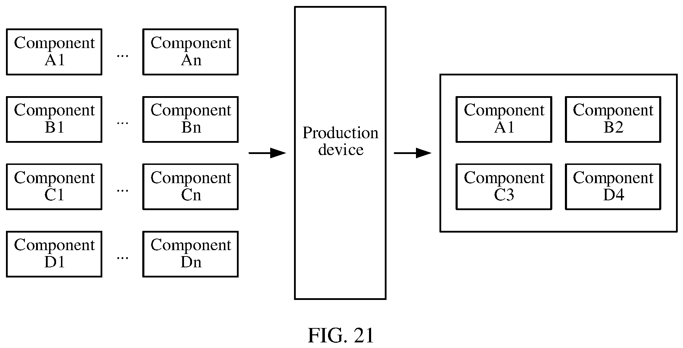

FIG. 21 is a schematic diagram of an application scenario of a component size grading method according to an embodiment of this application. A plurality of components having different sizes are input into the production device 300. The component size grading method provided in this embodiment of this application may be applied to the production device 300, to determine a matching solution of a plurality of pieces of size data of the plurality of components, match the plurality of components based on the determined matching solution, and output the plurality of components on which matching is completed. For example, a component A1 to a component An are first components having different sizes, a component B1 to a component Bn are second components having different sizes, a component C1 to a component Cn are third components having different sizes, and a component D1 to a component Dn are fourth components having different sizes. The plurality of components having different sizes are input into the production device 300. The production device 300 outputs the plurality of components on which matching is completed. The plurality of components on which matching is completed include the first component A1 having a specified size, the second component B2 having a specified size, the third component C3 having a specified size, and the third component D4 having a specified size.

An embodiment of this application further provides a computer program product. When the computer program product is run on a computer, the computer is caused to perform the foregoing related steps, to implement the component size grading method in the foregoing embodiments.

In addition, an embodiment of this application further provides an apparatus. The apparatus may be specifically a chip, an assembly, or a module, and the apparatus may include a processor and a memory that are connected. The memory is configured to store computer-executable instructions. When the apparatus is running, the processor may execute the computer-executable instructions stored in the memory, so that the chip performs the component size grading method in the foregoing method embodiments.

The production device, the computer storage medium, the computer program product, or the chip that is provided in the embodiments is configured to perform the corresponding method provided above. Therefore, for beneficial effects that can be achieved by the production device, the computer storage medium, the computer program product, or the chip, refer to the beneficial effects in the corresponding method provided above. Details are not described herein again.

A person skilled in the art may clearly learn from the foregoing descriptions of the implementations that, for convenience and brevity of description, division into the foregoing functional modules is only used as an example for description. During actual application, the foregoing functions may be allocated to different functional modules for implementation according to a requirement. In other words, an inner structure of an apparatus is divided into different functional modules, to complete all or a part of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or assemblies may be combined or integrated into another apparatus, or some features may be ignored or not performed. In addition, the displayed or discussed mutual coupling or direct coupling or communication connection may be implemented through some interfaces. The indirect coupling or communication connection between the apparatuses or units may be implemented in an electrical, mechanical, or another form.

The units described as separate parts may or may not be physically separate, and the parts displayed as units may be one or more physical units, may be located at one place, or may be distributed in a plurality of different places. A part or all of the units may be selected according to an actual requirement to achieve the objectives of the solutions of the embodiments.

In addition, functional units in embodiments of this application may be integrated in one processing unit, each of the units may stand alone physically, or two or more units may be integrated in one unit. The foregoing integrated unit may be implemented in a form of hardware, or may be implemented in a form of a software functional unit.

When the integrated unit is implemented in the form of a software functional unit and is sold or used as an independent product, the integrated unit may be stored in a readable storage medium. Based on such an understanding, the technical solutions of the embodiments of this application essentially, or the part contributing to the related art, or all or a part of the technical solutions may be implemented in a form of a software product. The software product is stored in a storage medium and includes several instructions for enabling a device (which may be a single-chip microcomputer, a chip, or the like) or a processor (processor) to perform all or a part of the steps of the method in the embodiments of this application. However, the foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended to describe the technical solutions of this application, but are not intended to limit this application. Although this application is described in detail with reference to exemplary embodiments, a person of ordinary skill in the art should understand that modifications or equivalent replacements may be made to the technical solutions of this application, without departing from the spirit and scope of the technical solutions of this application.

## Claims

1. A component size grading method, applied to a production device, and comprising:
obtaining a plurality of pieces of size data of a plurality of components;
determining a plurality of grading solutions of the plurality of components based on the plurality of pieces of size data;
determining matching solutions of the plurality of components based on the plurality of grading solutions of the plurality of components;
calculating a fitness score of each matching solution; and
determining a matching solution of a preset assembly based on the fitness score of each matching solution.

2. The component size grading method according to claim 1, wherein the determining a plurality of grading solutions of the plurality of components based on the plurality of pieces of size data comprises:
setting grading levels of the plurality of pieces of size data of the plurality of components and a grading threshold of each level; and
determining the grading levels of the plurality of pieces of size data of the plurality of components and the grading threshold of each level as the plurality of grading solutions of the plurality of components.

3. The component size grading method according to claim 2, wherein the determining matching solutions of the plurality of components based on the plurality of grading solutions of the plurality of components comprises:
determining, based on an inverse cumulative distribution function, a quantile corresponding to each grading threshold of the plurality of pieces of size data of the plurality of components;
grouping the plurality of pieces of size data of the plurality of components based on the quantile corresponding to each grading threshold; and
matching grouped size data of different components, to obtain matching solutions of the plurality of pieces of size data of the plurality of components.

4. The component size grading method according to claim 3, wherein the determining, based on an inverse cumulative distribution function, a quantile corresponding to each grading threshold of the plurality of pieces of size data of the plurality of components comprises:
calculating size data corresponding to each grading threshold by using the inverse cumulative distribution function of normal distribution, and determining the calculated size data corresponding to each grading threshold as the quantile.

5. The component size grading method according to claim 3, wherein the calculating a fitness score of each matching solution comprises:
calculating the fitness score of each matching solution based on the grouped size data of the different components by using a fitness function.

6. The component size grading method according to claim 5, wherein the determining a matching solution of a preset assembly based on the fitness score of each matching solution comprises:
when a fitness score of any matching solution is greater than or equal to a preset fitness score threshold, determining the any matching solution as the matching solution of the preset assembly; or
determining a matching solution with a highest fitness score in a plurality of matching solutions as the matching solution of the preset assembly.

7. The component size grading method according to claim 5, wherein the calculating the fitness score of each matching solution based on the grouped size data of the different components by using a fitness function comprises:
inputting the grouped size data of the different components that corresponds to each matching solution into a prediction model, to obtain a plurality of prediction results of each matching solution; and
obtaining the fitness score of each matching solution based on the plurality of prediction results of each matching solution by using the fitness function.

8. The component size grading method according to any one of claims 1 to 7, wherein the preset assembly is a hinge assembly, the hinge assembly has a flattening angle in a flattened state, and the fitness function is a yield calculation formula for all flattening angle prediction values in the matching solution.

9. The component size grading method according to claim 8, wherein the calculating the fitness score of each matching solution based on the grouped size data of the different components by using a fitness function comprises:
inputting the grouped size data of the different components that corresponds to each matching solution into a flattening angle prediction model, to obtain a plurality of predicted flattening angles of each matching solution; and
calculating yields of the plurality of predicted flattening angles of each matching solution, to obtain the fitness score of each matching solution.

10. The component size grading method according to claim 9, further comprising:
extracting a plurality of features affecting the flattening angle of the hinge assembly, wherein the plurality of features comprise a plurality of pieces of size data of a plurality of components of the hinge assembly; and
establishing the flattening angle prediction model based on the plurality of features and flattening angle data.

11. The component size grading method according to claim 10, wherein the extracting a plurality of features affecting the flattening angle of the hinge assembly comprises:
obtaining force information of the plurality of components of the hinge assembly in the flattened state;
obtaining sampled data corresponding to the size data of the plurality of components based on the force information of the plurality of components of the hinge assembly in the flattened state; and
performing regression analysis on the sampled data corresponding to the size data of the plurality of components, to obtain the plurality of features affecting the flattening angle of the hinge assembly.

12. The component size grading method according to claim 11, wherein the performing regression analysis on the sampled data corresponding to the size data of the plurality of components, to obtain the plurality of features affecting the flattening angle of the hinge assembly comprises:
standardizing the sampled data;
dividing the sampled data into a training set, and training and fitting a Lasso regression model by using the training set;
obtaining coefficients of all the sampled data based on the trained Lasso regression model; and
using absolute values of the coefficients as degrees of contribution of the size data of the components to the flattening angle, sorting the size data of the components in descending order based on the degrees of contribution, and selecting, based on a preset percentage, a plurality of pieces of top-ranked size data, to obtain the plurality of features.

13. The component size grading method according to claim 10, wherein the establishing the flattening angle prediction model based on the plurality of features and flattening angle data comprises:
training a preset deep learning model based on the plurality of features and the flattening angle data, to obtain the flattening angle prediction model.

14. The component size grading method according to claim 13, wherein the training a preset deep learning model based on the plurality of features and the flattening angle data, to obtain the flattening angle prediction model comprises:
establishing a training sample set based on a plurality of groups of features and flattening angle data corresponding to each group of features;
inputting a group of features and corresponding flattening angle data that are in the training sample set, and that are used as training data into the preset deep learning model, and calculating a loss function value of the preset deep learning model; and
adjusting parameters of the preset deep learning model when the loss function value of the preset deep learning model is greater than a preset value, continuing to train the preset deep learning model, until the loss function value of the preset deep learning model is less than or equal to the preset value, determining that training of the preset deep learning model is completed, and determining the preset deep learning model whose training is completed as the flattening angle prediction model.

15. A component size grading method, applied to a production device, and comprising:
obtaining a plurality of pieces of size data of a plurality of first components and a plurality of second components;
determining a plurality of grading solutions of the plurality of first components and the plurality of second components based on the plurality of pieces of size data;
determining matching solutions of the plurality of first components and the plurality of second components based on the plurality of grading solutions of the plurality of first components and the plurality of second components;
calculating a fitness score of each matching solution; and
determining matching solutions of a plurality of preset assemblies based on the fitness score of each matching solution, wherein each preset assembly comprises the first component and the second component.

16. The component size grading method according to claim 15, wherein the determining a plurality of grading solutions of the plurality of first components and the plurality of second components based on the plurality of pieces of size data comprises:
setting grading levels of the plurality of pieces of size data of the plurality of first components and the plurality of second components and a grading threshold of each level; and
determining the grading levels of the plurality of pieces of size data of the plurality of first components and the plurality of second components and the grading threshold of each level as the plurality of grading solutions of the plurality of first components and the plurality of second components.

17. The component size grading method according to claim 16, wherein the determining matching solutions of the plurality of first components and the plurality of second components based on the plurality of grading solutions of the plurality of first components and the plurality of second components comprises:
determining, based on an inverse cumulative distribution function, a quantile corresponding to each grading threshold of the plurality of pieces of size data of the plurality of first components and the plurality of second components;
grouping the plurality of pieces of size data of the plurality of first components and the plurality of second components based on the quantile corresponding to each grading threshold; and
matching grouped size data of the plurality of first components and the plurality of second components, to obtain matching solutions of the plurality of pieces of size data of the plurality of first components and the plurality of second components.

18. The component size grading method according to claim 17, wherein the calculating a fitness score of each matching solution comprises:
calculating the fitness score of each matching solution based on the grouped size data of the plurality of first components and the plurality of second components by using a fitness function.

19. The component size grading method according to any one of claims 15 to 18, wherein the preset assembly is a hinge assembly, the hinge assembly has a flattening angle in a flattened state, and the fitness function is a yield calculation formula for all flattening angle prediction values in the matching solution.

20. The component size grading method according to claim 19, wherein the calculating the fitness score of each matching solution based on the grouped size data of the plurality of first components and the plurality of second components by using a fitness function comprises:
inputting the grouped size data of the plurality of first components and the plurality of second components that corresponds to each matching solution into a flattening angle prediction model, to obtain a plurality of predicted flattening angles of each matching solution; and
calculating yields of the plurality of predicted flattening angles of each matching solution, to obtain the fitness score of each matching solution.

21. A production device, comprising:
a feeding part, configured to receive a plurality of components;
a processing part, configured to perform the component size grading method according to any one of claims 1 to 14, and determine a matching solution of a preset assembly;
a sorting part, configured to match the plurality of components based on the matching solution of the preset assembly; and
a discharging part, configured to output the plurality of components on which matching is completed.

22. The production device according to claim 21, further comprising:
a measurement part, configured to measure a plurality of pieces of size data of the plurality of components, and send the measured plurality of pieces of size data of the plurality of components to the processing part.

23. The production device according to claim 21, further comprising:
an assembly part, configured to assemble the plurality of components on which matching is completed into the preset assembly.

24. A production device, comprising:
a feeding part, configured to receive a plurality of first components and a plurality of second components;
a processing part, configured to perform the component size grading method according to any one of claims 15 to 20, and determine matching solutions of a plurality of preset assemblies;
a sorting part, configured to match the plurality of first components and the plurality of second components based on the matching solutions of the plurality of preset assemblies; and
a discharging part, configured to output the plurality of first components and the plurality of second components on which matching is completed.
